# EUROPÄISCHE PATENTSCHRIFT

(11) **EP 2 330 929 B1**
(45) Veröffentlichungstag und Bekanntmachung des Hinweises auf die Patenterteilung: **06.06.2012**
(21) Anmeldenummer: 09777746.0
(22) Anmeldetag: 07.08.2009
(51) Int. Cl.: A23L 2/38, C12C 12/04

(54) **VERFAHREN ZUR HERSTELLUNG VON ALKOHOLFREIEN GETRÄNKEN AUF FERMENTATIVEM WEGE**
METHOD FOR PRODUCING NON-ALCOHOLIC BEVERAGES BY FERMENTATION
PROCÉDÉ DE FABRICATION DE BOISSONS SANS ALCOOL PAR FERMENTATION

(30) Priorität: 07.08.2008 DE 102008036851; 25.09.2008 DE 102008048939
(43) Veröffentlichungstag der Anmeldung: 15.06.2011
(73) Patentinhaber: Nordmann Fine Food GmbH, 18439 Stralsund (DE)
(72) Erfinder: BERBERICH, Markus, 18439 Stralsund (DE); LUCAS, Frank, 18439 Stralsund (DE); PUTTNIES, Christoph, 18439 Stralsund (DE); NORDMANN, Oliver, 18439 Stralsund (DE)
(74) Vertreter: Weiss, Wolfgang
(86) Internationale Anmeldenummer: PCT/EP2009/005752
(87) Internationale Veröffentlichungsnummer: WO 2010/015416

(56) Entgegenhaltungen:
- EP-A- 0 544 643
- EP-A- 0 930 359
- WO-A-95/22911
- DATABASE WPI Week 200124 Thomson Scientific, London, GB; AN 2001-229096 XP002556868 & JP 2001 000157 A (BRAUSTERN KK) 9. Januar 2001 (2001-01-09)
- DATABASE WPI Week 200451 Thomson Scientific, London, GB; AN 2004-529808 XP002556869 & JP 2004 201604 A (FUKKOYA KK) 22. Juli 2004 (2004-07-22)

## Beschreibung

Die vorliegende Erfindung betrifft ein Verfahren zur fermentativen Herstellung eines alkoholfreien Getränks, vorzugsweise unter Verwendung biologischer Rohstoffe.

WO 95/22911 beschreibt ein fermentatives Verfahren zur Herstellung eines alkoholfreien Erfrischungsgetränks unter Verwendung eines Mikroorganismus, der Glucose in Gluconsäure umwandelt. Ein Nachteil dieses Verfahrens ist, dass dem resultierenden Getränk Zucker, insbesondere Saccharose, zugesetzt und der pH-Wert durch Zugabe von anorganischen Salzen wie Calcium- und Magnesiumcarbonat eingestellt werden muss.

EP-A-0 930 359 betrifft ebenfalls ein Verfahren zur fermentativen Herstellung eines Getränks, wobei ein einen Cerealienextrakt enthaltendes Ausgangsmaterial einer zweistufigen fermentativen Behandlung unterzogen wird, wobei die erste Stufe eine Behandlung mit Lactobacillus und Hefe oder Hefe-Lysat und die zweite Stufe eine Behandlung mit einem Acetobacter umfasst. Auch hier muss dem Produkt Zucker zugesetzt und der pH-Wert durch Zugabe von Calcium- und Magnesiumcarbonat eingestellt werden.

Die der Erfindung zugrunde liegende Aufgabe bestand darin, ein neues Verfahren zur fermentativen Herstellung von alkoholfreien Getränken, insbesondere alkoholfreien Fruchtsaftgetränken, zu entwickeln, bei dem die Nachteile des Standes der Technik zumindest weitestgehend vermieden werden können.

Ein Gegenstand der Erfindung ist ein Verfahren zur fermentativen Herstellung eines alkoholfreien Getränks, insbesondere eines alkoholfreien Erfrischungsgetränks auf Fruchtsaftbasis, umfassend die Schritte:
(a) Bereitstellen eines aufgeschlossenen Cerealienextrakts und
(b) Erzeugen einer Würze aus dem Cerealienextrakt,
(c) Behandeln der Würze aus Schritt (b) mit Lactobacillus-Mikroorganismen, um eine milchsaure Würze zu erhalten,
(d) Erhitzen der aus Schritt (c) erhaltenen milchsauren Würze,
(e) Behandeln der milchsaure Würze aus Schritt (d) mit Hefe-Mikroorganismen oder einem Hefe-Lysat, um eine Malzbase zu erhalten,
(f) Ausmischen der Malzbase, insbesondere umfassend das Zumischen von Fruchtsaft und
(g) Durchführen weiterer Behandlungsschritte zur Stabilisierung, Klärung und Vervollständigung des Getränks.

Das erfindungsgemäße Verfahren enthält mehrere bevorzugte Merkmale, die einzeln oder in Kombination eine besonders vorteilhafte Wirkung erzielen.

Diese Merkmale sind wie folgt:
- Verwendung einer Mischung aus Weizen- und Gerstenmalz als Ausgangsmaterial;
- Verwendung einer Mehrfachmaischprozedur;
- Durchführen eines einstufigen Fermentationsprozesses mit Lactobacillus-Mikroorganismen zur Gewinnung der Malzbase;
- Erhitzen der Malzbase zum Entfernen unerwünschter Aromastoffe;
- Hefe-Kontaktverfahren mit Ausmischung eines Fruchtsaftzusatzes und der Aromakomponenten in Anwesenheit der hefehaltigen Malzbase;
- Stabilisierung des Getränks durch eine mehrstufige, insbesondere vierstufige Separationsprozedur;
- ausschließliche Verwendung biologischer Rohstoffe, insbesondere von Rohstoffen in biozertifizierter Qualität.

Die vorliegende Erfindung betrifft die Herstellung eines alkoholfreien Getränks, vorzugsweise eines alkoholfreien Erfrischungsgetränks auf Fruchtsaftbasis. Der Alkoholgehalt des resultierenden Getränks ist im allgemeinen < 1,2 Vol.-%, vorzugsweise < 0,5 Vol.-%. Zur Herstellung des Getränks werden vorzugsweise ausschließlich biologische Rohstoffe, z.B. Rohstoffe gemäß EG-Bioverordnung, verwendet. Weiterhin erfolgt in einer bevorzugten Ausführungsform die Herstellung einer Malzbase für das Getränk unter Beachtung des deutschen Reinheitsgebots für Bier, d.h. als Zusätze werden lediglich Malz, Wasser und vergärende Mikroorganismen eingesetzt. In anderen Ausführungsformen kann das erfindungsgemäße Verfahren jedoch auch industrielle Abwandlungen der bevorzugten Herstellungsweise betreffen.

Schritt (a) des Verfahrens umfasst das Bereitstellen eines aufgeschlossenen Cerealienextrakts. Vorzugsweise wird hierzu als Ausgangsmaterial eine Mischung aus Weizen- und Gerstenmalz, insbesondere in Bioqualität eingesetzt. Der Weizenanteil umfasst vorzugsweise 40-75 Gew.-%, z.B. ca. 60-70 Gew.-%. Die Malze werden auf übliche Weise einem Aufschlussverfahren, z.B. einer Schrotung, unterzogen und anschließend mit Wasser, insbesondere Brauwasser, vermischt. Statt den Malzen können jedoch auch fertige Zuckerprodukte, z.B. Glucosesirups oder Invertzucker, gegebenenfalls mit Malzwürzen gemischt oder mit Enzymen aufgeschlossene Malzlösungen, zum Einsatz kommen, wodurch die nachstehend beschriebene Maischprozedur vereinfacht oder vermieden werden kann.

Gemäß Schritt (b) wird eine Würze aus dem aufgeschlossenen Cerealienextrakt erzeugt. Vorzugsweise umfasst Schritt (b) eine Maischprozedur, insbesondere eine Vielfachmaischprozedur. Dabei wird der aufgeschlossene Cerealienextrakt einer mehrfachen Maischprozedur unterzogen mit dem Ziel, einen intensiven natürlichen Aufschluss der im Malz enthaltenen natürlichen Stärke und Mehrfachzucker zu erreichen, wobei günstigerweise ein Glucoseanteil von 1,0-1,5 Gew.-% und/oder ein Gewichtsverhältnis von Glucose zu Maltose von 1:4 bis 1:6,5 erreicht wird.

Die Maischprozedur wird vorzugsweise für eine Dauer von 3-6 h, z.B. von etwa 5 h, und einem Temperaturbereich von 30-80 °C, vorzugsweise bei 35-78 °C, bei atmosphärischen Bedingungen durchgeführt. Günstigerweise umfasst die Maischprozedur ein fortwährendes Ziehen und Wiederzumischen von Teilmaischen. Gegebenenfalls kann zusätzlich ein immer wieder erfolgendes Zuführen und Einrühren kalter, frisch eingemaischter Malzschrotlösung erfolgen. Damit wird gemäß dem Reinheitsgebot für Bier ein natürlicher Abbau von Stärke bis zur Glucose und eine optimale Wirkung der natürlichen Malzenzyme erreicht. Die entstehende Glucose weist eine höhere Süßkraft als die ansonsten überwiegend in Maische vorliegende Maltose auf, wodurch bis ins fertige Getränk eine geschmacklich vorteilhafte Wirkung erreicht wird.

In einer industriellen Ausführungsform des Verfahrens kann die Malzwürze mit industriellen, stärke- und zuckerabbauenden Enzymen versetzt werden. Dies entspricht zwar nicht dem Reinheitsgebot, ermöglicht jedoch eine erhebliche Abkürzung und Vereinfachung des Verfahrens.

Weiterhin umfasst Schritt (b) vorzugsweise eine Abtrennung von Feststoffen zur Erzeugung einer klaren Vorderwürze. Hierzu wird die glucosereiche Maische beispielsweise in einem so genannten Läuterbottich oder einer anderen Vorrichtung, z.B. einem Maischefilter, filtriert, d.h. die Feststoffe werden von der Flüssigkeit abgetrennt. Dabei wird eine Vorderwürze mit einem Stammwürzegehalt von günstigerweise 6-25 %, vorzugsweise von 15-22 % z.B. etwa 18-21 %, erhalten. Die Vorderwürze ist vorzugsweise sehr blank, d.h. sie hat einen Trübungswert von vorzugsweise unter 5 EBC-Einheiten.

Weiterhin umfasst Schritt (b) günstigerweise ein Erhitzen dieser Vorderwürze, vorzugsweise bei einer Temperatur von 99-105 °C, über eine Dauer von 3-20 min und einem Druck von 0,01-0,2 bar. Die resultierende erhitzte Würze wird anschließend gegebenenfalls einer weiteren Trennprozedur unterzogen, z.B. in einem Whirlpool oder einem Separator mit folgender Abkühlung auf etwa 35-55 °C, vorzugsweise auf etwa 40-50 °C.

Die entstehende flüssige Würze wird gemäß Schritt (c) des Verfahrens mit Lactobacillus-Mikroorganismen behandelt. Die Lactobacillen werden vorzugsweise in einer Konzentration von 3-20 Gew.-%, vorzugsweise etwa 6-14 Ges.-%, der Würze zugeimpft. Dann erfolgt vorzugsweise über eine Dauer von 48-72 h, bei einer Temperatur von 35-55 °C, insbesondere von 45-50 °C, eine Milchsäurevergärung der Würze. Vorzugsweise wird die Milchsäurevergärung bis zu einem Milchsäuregehalt von 0,6-1,2 Gew.-%, vorzugsweise von 0,8-1 Gew.-% durchgeführt.

Gemäß Schritt (d) wird die milchsaure Würze erhitzt. Das Erhitzen erfolgt vorzugsweise für eine Dauer von 40-80 min, insbesondere 50-70 min, bei einer Temperatur von 99-105 °C und einem niedrigen Druck, z.B. von 0,01-0,2 bar. Auf diese Weise können unerwünschte Würzaromen entfernt werden. Außerdem wird die Stabilität des Produkts erhöht.

Der nachfolgende Schritt (e) umfasst das Behandeln der resultierenden Flüssigkeit mit Hefe-Mikroorganismen. Schritt (e) umfasst vorzugsweise ein Belüften vor Zugabe der Hefe, wobei günstigerweise ein Sauerstoffgehalt von 6-12 mg/l eingestellt wird. Anschließend erfolgt die Zugabe von 3-50·10⁶ Zellen/ml Hefeorganismen, vorzugsweise von obergäriger Brauhefe (*Saccharomyces cerevisiae*). Die Hefe wird vorzugsweise in einem Kältekontaktverfahren zugegeben, d.h. die Zugabe der Hefe erfolgt bei einer Temperatur von 12-18 °C, vorzugsweise etwa 15 °C, unter Kühlung der Mischung aus Hefe und gesäuerter Würze vorzugsweise auf 0-4 °C, besonders bevorzugt auf etwa 0 °C.

Die resultierende Mischung, die so genannte Malzbase, kann anschließend zwischengelagert werden, z.B. in einem Lagertank bei etwa 0 °C und unter einem Druck von etwa 0,5 bar, bis zur Getränkeausmischung und Endherstellung.

In einer industriellen Ausführungsform kann die Durchführung von Schritt (e) dahingehend abgewandelt werden, dass anstelle der Hefe ein Hefe-Lysat zugegeben wird.

Schritt (f) des erfindungsgemäßen Verfahrens umfasst die Ausmischung der Malzbase zum fertigen Getränk, vorzugsweise durch Zugabe von Fruchtsaft. Dieser Prozessschritt wird vorzugsweise unter einer CO₂-Atmosphäre, z.B. in einem geeigneten Tank, durchgeführt. Ein besonderes Merkmal dieses Schritts ist die Ausmischung der Malzbase und Fruchtsaft in Gegenwart lebender Hefezellen. Vorzugsweise erfolgt der Prozess unter Tiefkühlung bei 0-4 °C, besonders bevorzugt bei etwa 0 °C, und unter einem Druck von 1-2 bar. Dabei werden je nach gewünschtem Geschmack des Endprodukts unterschiedliche Fruchtsäfte, vorzugsweise biologische Fruchtsäfte, z.B. Trauben- und/oder Apfelsäfte, sowie natürliche biologische Aromen zugesetzt. Vorzugsweise werden Fruchtsäfte des Brixwertes 6-20 und des Filtrationsgrades von < 15 NTU (= Trübungsintensität) eingesetzt.

Bevorzugt wird dieser Prozessschritt unter intensiver Durchmischung durchgeführt, so dass die im Tank befindliche Kohlensäure sich intensiv im Getränk bindet, wobei ein Fertiggetränk mit einer sehr feinperligen Kohlensäure mit Gehalten von vorzugsweise 1-6 g Kohlensäure pro Liter Getränk, besonders bevorzugt 3,5-4 g/l erhalten wird. Auf diese Weise kann auf die im Verfahren des Standes der Technik angewandte Carbonisierung durch Eindüsung der Kohlensäure vor der Abfüllung verzichtet werden.

Ein besonderer Vorteil der erfindungsgemäßen Ausmischtechnologie unter Anwesenheit von lebender Hefe ist ein weitestgehend vollständiger Verzehr des im Getränk enthaltenen bzw. durch die einzelnen Prozesschritte bzw. durch den Fruchtsaft und das Getränk eingebrachten Sauerstoffs. Dadurch erhöht sich die oxidative Stabilität des Getränks und damit seine Geschmacksstabilität erheblich. Vorzugsweise besitzt das resultierende Getränk eine Stabilität von mehr als 10 Warmtagen (Lagerung für jeweils 1

Tag bei 0 °C gefolgt von jeweils 1 Tag bei 40 °C).

Weiterhin können durch die Kältebehandlung auch trübungsbildende Stoffe ausgefällt werden. Eine kontinuierliche Entfernung dieser Trübstoffe aus dem Ausmischtank trägt ebenfalls zur Erhöhung der physikalischen Stabilität des Fertiggetränks bei.

Schritt (g) des erfindungsgemäßen Verfahrens umfasst die Durchführung weiterer Behandlungsschritte zur Stabilisierung, Klärung und Vervollständigung des Getränks. Vorzugsweise umfasst Schritt (g) eine mehrstufige Separations- und Filtrationsprozedur, die beispielsweise folgende Stufen beinhaltet:
(i) Zentrifugation,
(ii) Grobfiltration, z.B. mit Kieselgur als adaptiven Filtrationsschritt, und
(iii) eine ein- oder mehrstufige, insbesondere eine zweistufige Feinfiltration, z.B eine Mikrofeinfiltration, durch Kerzenfilter.

Günstigerweise ist dabei darauf zu achten, dass dieser Schritt unter sauerstoffarmen Bedingungen durchgeführt wird, d.h. das Eindringen neuerlichen Luftsauerstoffs sollte vermieden werden.

Die anschließende Abfüllung kann nach üblichen Methoden unter Verwendung geeigneter Anlagen erfolgen. Vorzugsweise ist darauf zu achten, auch hier das Eindringen von Luftsauerstoff zu vermeiden. Weiterhin ist es bevorzugt, dass die Abfüllung unter aseptischen Bedingungen und/oder in Verbindung mit einer anschließenden Pasteurisation, z.B. durch Beaufschlagung von 30-500, beispielsweise etwa 400 Pasteureinheiten, erfolgt.

Das durch das erfindungsgemäße Verfahren hergestellte Getränk enthält vorzugsweise eine fermentierte Malzbase wie oben beschrieben in Anteilen von vorzugsweise 8-20 Gew.-%, besonders bevorzugt von 10-14 Gew.-%.

Weiterhin enthält das Getränk Fruchtsaft aus Fruchtsaftkonzentrat, z.B. Trauben-, Holunder-, Apfel- und/oder Orangensaftkonzentrat, vorzugsweise in einem Anteil von 15-25 Gew.-%.

Zusätzlich enthält das durch das erfindungsgemäße Verfahren hergestellte Getränk Fruchtaromen, vorzugsweise ausschließlich biozertifizierte natürliche Aromen, insbesondere Aromen aus den namensgebenden Früchten. Bevorzugte Aromatypen sind z.B. Holunder-Traube, Orange-Ingwer, Red Apple oder Lemon-Grass.

Der Gehalt an Kohlenhydraten beträgt vorzugsweise 4-5 g/100 ml, besonders bevorzugt etwa 4,5-4,8 g/100 ml. Der Anteil an fruchteigenem Zucker ist vorzugsweise ≥ 80 %. Das durch das erfindungsgemäße Verfahren hergestellte Getränk enthält günstigerweise 8-20 g/l Glucose und 6-12 g/l Maltose. Der Anteil von Glucose in Gewichtsprozent der Malzbase ist vorzugsweise 1-1,25 %.

Die physikalische Stabilität des Getränks ist vorzugsweise mehr als 10 Warmtage (Lagerung für jeweils 1 Tag bei 0 °C gefolgt von jeweils 1 Tag bei 40 °C). Diese hohe Stabilität wird erreicht durch eine Lagerung bei 0 °C für eine Dauer von 3-4 Tagen und anschließende Abschlämmung nach Fruchtsaftzugabe. Hierdurch wird eine Verbesserung der Stabilität um bis zu 8 Warmtage oder mehr erreicht.

Weiterhin ist bevorzugt, dass das resultierende Fertiggetränk maximal 1 mg/l, besonders bevorzugt 0,1-0,2 mg/l Restsauerstoff enthält.

Der Anteil an Milchsäure im erfindungsgemäß hergestellten Getränk ist vorzugsweise 0,5-2,0 g/l. Weiterhin ist bevorzugt, dass das erfindungsgemäß hergestellte Getränk weniger als 0,5 g/l, vorzugsweise weniger als 0,25 g/l Gluconsäure bzw. Gluconat und/oder weniger als 1 g/l, vorzugsweise weniger als 0,6 g/l Saccharose enthält.

### Beispiele

Die in den Beispielen 1-4 beschriebenen Getränke wurden nach dem deutschen Reinheitsgebot ausschließlich unter Verwendung biologischer Rohstoffe hergestellt.

### Beispiel 1: Erfrischungsgetränk Red Apple

Zur Herstellung des Getränks wurden folgende Zutaten verwendet:
- Mineralwasser
- Apfelsaft aus Apfelsaftkonzentrat (23 Gew.-%)
- Holundersaft aus Holundersaftkonzentrat (1 Gew.-%)
- Malzbase aus Weizen- und Gerstenmalz (10 Gew.-%)
- biologische Aromen
- Kohlensäure

100 ml des Getränks enthalten etwa 4,4 g Kohlenhydrate. Die bedeutendsten Kohlenhydrate sind wie folgt:

| | | |
|---|---|---|
| Saccharose | (ASU L 31.00-12 mod.enzymatisch) | 0,51 g/l |
| Maltose | (ASU L 48.02.07-2 mod.enzymatisch) | 6,20 g/l |
| Glucose | (ASU L 31.00-12 mod.enzymatisch) | 9,50 g/l |
| Fructose | (ASU L 31.00-13 mod.enzymatisch) | 17,20 g/l |

### Beispiel 2: Erfrischungsgetränk Holunder-Traube

Zutaten:
- Mineralwasser
- Traubensaft aus Traubensaftkonzentrat (18 Gew.-%)
- Holundersaft aus Holundersaftkonzentrat (3 Gew.-%)
- Malzbase aus Weizen- und Gerstenmalz (10 Gew,.-%)
- biologische Aromen
- Kohlensäure

Das Getränk enthält 4,7 g Kohlenhydrate pro 100 ml. Die Zusammensetzung der bedeutendsten Kohlenhydrate ist wie folgt:

| | | |
|---|---|---|
| Saccharose | (ASU L 31.00-12 mod.enzymatisch) | 0,47 g/l |
| Maltose | (ASU L 48.02.07-2 mod.enzymatisch) | 7,00 g/l |
| Glucose | (ASU L 31.00-12 mod.enzymatisch) | 18,00 g/l |
| Fructose | (ASU L 31.00-13 mod.enzymatisch) | 18,60 g/l |

### Beispiel 3: Erfrischungsgetränk Lemon-Grass

Zutaten:
- Mineralwasser
- Traubensaft aus Traubensaftkonzentrat (19 Gew.-%)
- Malzbase aus Weizen- und Gerstenmalz (14 Gew.-%)
- biologische Aromen
- Kohlensäure

Das Getränk enthält 4,7 g Kohlenhydrate pro 100 ml. Die Zusammensetzung der bedeutendsten Kohlenhydrate ist wie folgt:

| | | |
|---|---|---|
| Saccharose | (ASU L 31.00-12 mod.enzymatisch) | 0,09 g/l |
| Maltose | (ASU L 48.02.07-2 mod.enzymatisch) | 9,20 g/l |
| Glucose | (ASU L 31.00-12 mod.enzymatisch) | 18,56 g/l |
| Fructose | (ASU L 31.00-13 mod.enzymatisch) | 17,30 g/l |

### Beispiel 4: Erfrischungsgetränk Orange-Ingwer

Zutaten:
- Mineralwasser
- Traubensaft aus Traubensaftkonzentrat (19 Gew.-%)
- Malzbase aus Weizen- und Gerstenmalz (14 Gew.-%)
- biologische Aromen
- Kohlensäure

Das Getränks enthält 4,7 g Kohlenhydrate pro 100 ml. Die Zusammensetzung der bedeutendsten Kohlenhydrate ist wie folgt:

| | | |
|---|---|---|
| Saccharose | (ASU L 31.00-12 mod.enzymatisch) | <0,05 g/l |
| Maltose | (ASU L 48.02.07-2 mod.enzymatisch) | 10,50 g/l |
| Glucose | (ASU L 31.00-12 mod.enzymatisch) | 18,00 g/l |
| Fructose | (ASU L 31.00-13 mod.enzymatisch) | 17,00 g/l |

Die Haltbarkeit der Getränke gemäß den Beispielen 1-4 wurde zu > 10 Warmtagen (Lagerung für jeweils 1 Tag bei 0 °C gefolgt von jeweils 1 Tag bei 40 °C) bestimmt.

## Patentansprüche

1. Verfahren zur fermentativen Herstellung eines alkoholfreien Getränks, umfassend die Schritte:
(a) Bereitstellen eines aufgeschlossenen Cerealienextrakts und
(b) Erzeugen einer Würze aus dem Cerealienextrakt,
(c) Behandeln der Würze aus Schritt (b) mit Lactobacillus-Mikroorganismen, um eine milchsaure Würze zu erhalten,
(d) Erhitzen der aus Schritt (c) erhaltenen milchsauren Würze,
(e) Behandeln der milchsauren Würze aus Schritt (d) mit Hefe-Mikroorganismen oder einem Hefe-Lysat, um eine Malzbase zu erhalten,
(f) Ausmischen der Malzbase und
(g) Durchführen weiterer Behandlungsschritte zur Stabilisierung, Klärung und Vervollständigung des Getränks.

2. Verfahren nach Anspruch 1,
**dadurch gekennzeichnet,**
**dass** zur Herstellung des Getränks ausschließlich biologische Rohstoffe verwendet werden.

3. Verfahren nach einem der Ansprüche 1 oder 2,
**dadurch gekennzeichnet,**
**dass** Schritt (a) das Bereitstellen einer Mischung von Weizen- und Gerstenmalz, vorzugsweise mit einem Weizenanteil von 40-75 Gew.-% umfasst.

4. Verfahren nach einem der Ansprüche 1 bis 3,
**dadurch gekennzeichnet,**
**dass** Schritt (b) eine Maischprozedur, insbesondere eine Vielfachmaischprozedur umfasst, wobei vorzugsweise ein Glucoseanteil von 1,0-1,5 Gew.-% und/oder ein Gewichtsverhältnis von Glucose zu Maltose von 1:4 bis 1:6,5 erreicht wird.

5. Verfahren nach Anspruch 4,
**dadurch gekennzeichnet,**
**dass** die Maischprozedur für eine Dauer von 3-6 h in einem Temperaturbereich von 30-80 °C bei atmosphärischem Druck durchgeführt wird.

6. Verfahren nach einem der Ansprüche 1 bis 5,
**dadurch gekennzeichnet,**
**dass** Schritt (b) eine Abtrennung von Feststoffen zur Erzeugung einer Vorderwürze umfasst, wobei vorzugsweise ein Trübungswert unter 5 EBC-Einheiten erreicht wird, und die Vorderwürze insbesondere einen Stammwürzegehalt von 6-25 %, vorzugsweise von 15-22 % aufweist.

7. Verfahren nach Anspruch 6,
**dadurch gekennzeichnet,**
**dass** Schritt (b) ein Erhitzen der Vorderwürze vorzugsweise bei 99-105 °C über eine Dauer von 3-20 min und einem Druck von 0,01-0,2 bar durchgeführt wird, um eine Würze zu erhalten, die anschließend gegebenenfalls einer Trennprozedur bei 35-55 °C unterzogen wird.

8. Verfahren nach einem der Ansprüche 1 bis 7,
**dadurch gekennzeichnet,**
**dass** Schritt (c) bis zur Einstellung eines Milchsäuregehalts von 0,6-1,2 Gew.-% erfolgt.

9. Verfahren nach einem der Ansprüche 1 bis 8,
**dadurch gekennzeichnet,**
**dass** Schritt (c) das Behandeln der Würze mit Lactobacillus-Organismen von 48-72 h bei einer Temperatur von 35-55 °C, vorzugsweise 45-50 °C, umfasst.

10. Verfahren nach einem der Ansprüche 1 bis 9,
**dadurch gekennzeichnet,**
**dass** Schritt (d) ein Erhitzen für eine Dauer von 40-80 min bei einer Temperatur von 99-105 °C und einem Druck von 0,01-0,2 bar umfasst.

11. Verfahren nach einem der Ansprüche 1 bis 10,
**dadurch gekennzeichnet,**
**dass** Schritt (e) vor Zugabe der Hefe ein Belüften umfasst, wobei vorzugsweise ein Sauerstoffgehalt von 6-12 mg/l eingestellt wird.

12. Verfahren nach einem der Ansprüche 1 bis 11,
**dadurch gekennzeichnet,**
**dass** Schritt (e) die Zugabe von 3-50·10⁶ Zellen/ml einer obergärigen Braustufe, vorzugsweise bei einer Temperatur von 12-18 °C, und eine Kühlung der Mischung auf 0-4 °C umfasst.

13. Verfahren nach einem der Ansprüche 1 bis 12,
**dadurch gekennzeichnet,**
**dass** Schritt (f) die Zugabe von Fruchtsaft unter einer CO₂-Atmosphäre, vorzugsweise bei 0-4 °C und einem Druck von 1-2 bar erfolgt.

14. Verfahren nach Anspruch 13,
**dadurch gekennzeichnet,**
**dass** Schritt (f) eine intensive Durchmischung des Produkts umfasst, wobei ein Gehalt von 1-6 g CO₂ pro Liter Getränk, vorzugsweise 3,5-4 g/l, erreicht wird.

15. Verfahren nach einem der Ansprüche 1 bis 14,
**dadurch gekennzeichnet,**
**dass** Schritt (g) eine mehrstufige Separations- und Filtrationsprozedur umfasst, die vorzugsweise folgende Stufen beinhaltet:
(i) Zentrifugation,
(ii) Grobfiltration und
(iii) ein- oder mehrstufige Feinfiltration,
und vorzugsweise unter sauerstoffarmen Bedingungen durchgeführt wird.

## Claims

1. Method for producing a non-alcoholic beverage by fermentation, comprising the steps of :
(a) preparing a macerated cereal extract and
(b) producing a wort from the cereal extract,
(c) treating the wort from step (b) with Lactobacillus micro-organisms to obtain a wort containing lactic acid,
(d) heating the wort containing lactic acid obtained from step (c),
(e) treating the wort containing lactic acid from step (d) with yeast micro-organisms or with a yeast lysate to obtain a malt base,
(f) mixing the malt base and
(g) carrying out further treatment steps for stabilising, clarifying and completing the beverage.

2. Method according to claim 1, **characterised in that** solely organic raw materials are used to produce the beverage.

3. Method according to either claim 1 or claim 2, **characterised in that** step (a) comprises preparing a mixture of wheat malt and barley malt, preferably having a proportion of wheat of 40 to 75 % by weight.

4. Method according to any one of claims 1 to 3, **characterised in that** step (b) comprises a mashing procedure, in particular a multiple stage mashing procedure, a proportion of glucose of 1.0 to 1.5 % by weight and/or a weight ratio of glucose to maltose of 1:4 to 1:6.5 preferably being reached.

5. Method according to claim 4, **characterised in that** the mashing procedure is carried out over a period of 3 to 6 hours within a temperature range of 30 to 80 °C at atmospheric pressure.

6. Method according to any one of claims 1 to 5, **characterised in that** step (b) comprises separating solids to produce a first wort, a turbidity value below 5 EBC units preferably being reached, and the first wort having, in particular, an original extract content of 6 to 25 %, preferably of 15 to 22 %.

7. Method according to claim 6, **characterised in that** in step (b) the first wort is heated, preferably at 99 to 105 °C, over a period of 3 to 20 minutes and at a pressure of 0.01 to 0.2 bar, to obtain a wort which subsequently, if appropriate, is subjected to a separation procedure at 35 to 55 °C.

8. Method according to any one of claims 1 to 7, **characterised in that** step (c) takes place until a lactic acid content of 0.6 to 1.2 % by weight is reached.

9. Method according to any one of claims 1 to 8, **characterised in that** step (c) comprises treating the wort with Lactobacillus organisms for 48 to 72 hours, at a temperature of 35 to 55 °C, preferably of 45 to 50 °C.

10. Method according to any one of claims 1 to 9, **characterised in that** step (d) comprises heating over a period of 40 to 80 minutes at a temperature of 99 to 105 °C and at a pressure of 0.01 to 0.2 bar.

11. Method according to any one of claims 1 to 10, **characterised in that** step (e) comprises aeration before the yeast is added, an oxygen content of 6 to 12 mg/l preferably being reached.

12. Method according to any one of claims 1 to 11, **characterised in that** step (e) comprises adding 3 to 50·10⁶ cells/ml from a top-fermenting brewing stage, preferably at a temperature of 12 to 18 °C, and cooling the mixture to 0 to 4 °C.

13. Method according to any one of claims 1 to 12, **characterised in that** in step (f), fruit juice is added in a CO₂ atmosphere, preferably at 0 to 4 °C and at a pressure of 1 to 2 bar.

14. Method according to claim 13, **characterised in that** step (f) comprises intensive mixing of the product, a content of 1 to 6 g of CO₂ per litre of beverage being reached, preferably 3.5 to 4 g/l.

15. Method according to any one of claims 1 to 14, **characterised in that** step (g) comprises a multiple stage separation and filtration procedure which preferably includes the following stages:
(i) centrifuging,
(ii) coarse filtering and
(iii) single or multiple stage polish filtering,
and is preferably carried out under low-oxygen conditions.

## Revendications

1. Procédé de production par fermentation d'une boisson sans alcool, comprenant les étapes de :
(a) mise à disposition d'un extrait de céréales dégradé et
(b) génération d'un moût de l'extrait ce céréales,
(c) traitement du moût de l'étape (b) avec des micro-organismes *Lactobacillus* pour obtenir un moût d'acide lactique,
(d) chauffage du moût d'acide lactique obtenu à l'étape (c),
(e) traitement du moût d'acide lactique de l'étape (d) avec des micro-organismes de levure ou un lysat de levure pour obtenir une base de malt,
(f) mélange de la base de malt et
(g) réalisation d'autres étapes de traitement pour la stabilisation, la clarification et la finalisation de la boisson.

2. Procédé selon la revendication 1,
**caractérisé en ce que**,
pour produire la boisson, on utilise exclusivement des matières premières biologiques.

3. Procédé selon l'une des revendications 1 ou 2,
**caractérisé en ce que**
l'étape (a) comprend la mise à disposition d'un mélange de malt de blé et d'orge, de préférence avec une proportion de blé de 40 à 75 % en poids.

4. Procédé selon l'une des revendications 1 à 3,
**caractérisé en ce que**
l'étape (b) comprend une procédure de maische, en particulier, une procédure de maische multiple, dans laquelle on atteint de préférence une proportion de glucose de 1,0 à 1,5 % en poids et/ou un rapport en poids du glucose au maltose de 1:4 à 1:6,5.

5. Procédé selon la revendication 4,
**caractérisé en ce que**
la procédure de maische est réalisée pendant une durée de 3 à 6 h dans une plage de température de 30 à 80° C à la pression atmosphérique.

6. Procédé selon l'une des revendications 1 à 5,
**caractérisé en ce que**
l'étape (b) comprend une séparation des solides pour produire un premier moût, une valeur de trouble inférieure à 5 unités EBC étant atteinte de préférence, et le premier moût présentant en particulier une teneur en moût primitif de 6 à 25 %, de préférence, de 15 à 22 %.

7. Procédé selon la revendication 6,
**caractérisé en ce que**
à l'étape (b) est réalisé un chauffage du premier moût de préférence de 99 à 105° C sur une durée de 3 à 20 min et à une pression de 0,01 à 0,2 bars pour obtenir un moût qui est soumis ensuite éventuellement à une procédure de séparation de 35 à 55° C.

8. Procédé selon l'une des revendications 1 à 7,
**caractérisé en ce que**
l'étape (c) s'effectue jusqu'à l'ajustement d'une teneur en acide lactique de 0,6 à 1,2 % en poids.

9. Procédé selon l'une des revendications 1 à 8,
**caractérisé en ce que**
l'étape (c) comprend le traitement du moût avec des organismes *Lactobacillus* de 48 à 72 h à une température de 35 à 55° C, de préférence de 45 à 50° C.

10. Procédé selon l'une des revendications 1 à 9,
**caractérisé en ce que**
l'étape (d) comprend un chauffage pendant une durée de 40 à 80 min à une température de 99 à 105° C et à une pression de 0,01 à 0,2 bars.

11. Procédé selon l'une des revendications 1 à 10,
**caractérisé en ce que**
l'étape (e) comprend une aération avant l'addition de levure, une teneur en oxygène étant ajustée de préférence de 6 à 12 mg/l.

12. Procédé selon l'une des revendications 1 à 11,
**caractérisé en ce que**
l'étape (e) comprend l'addition de 3 à 50 * 10⁶ cellules/ml d'une étape de brassage de fermentation haute, de préférence à une température de 12 à 18° C et un refroidissement du mélange de 0 à 4° C.

13. Procédé selon l'une des revendications 1 à 12,
**caractérisé en ce que**
à l'étape (f) s'effectue l'addition de jus de fruit sous une atmosphère de CO₂ de préférence de 0 à 4° C et à une pression de 1 à 2 bars.

14. Procédé selon la revendication 13,
**caractérisé en ce que**
l'étape (f) comprend un mélangeage intensif du produit, une teneur de 1 à 6 g de CO₂ par litre de boisson, de préférence de 3,5 à 4 g/l étant obtenue.

15. Procédé selon l'une des revendications 1 à 14,
**caractérisé en ce que**
l'étape (g) comprend une procédure de séparation et de filtration à plusieurs étapes qui comprend de préférence les étapes suivantes :
(i) centrifugation,
(ii) filtration grossière
(iii) filtration fine en une ou plusieurs étapes
et est réalisée de préférence dans des conditions pauvres en oxygène.
